# EUROPEAN PATENT APPLICATION

(11) **EP 4 485 673 A1**
(43) Date of publication of application: **01.01.2025**
(21) Application number: 23760181.0
(22) Date of filing: 27.02.2023
(51) Int. Cl.: H01M 50/531, H01G 11/80, H01G 11/84, H01M 50/103, H01M 50/105, H01M 50/129, H01M 50/15, H01M 50/16, H01M 50/164, H01M 50/166, H01M 50/169, H01M 50/176, H01M 50/178, H01M 50/54, H01M 50/548

(54) **POWER STORAGE DEVICE AND METHOD FOR PRODUCING POWER STORAGE DEVICE**

(30) Priority: 26.02.2022 JP 2022028729
(71) Applicant: Dai Nippon Printing Co., Ltd., Tokyo 162-8001 (JP)
(72) Inventor: SASAKI, Miho, Tokyo 162-8001 (JP); AKUTSU, Koki, Tokyo 162-8001 (JP)
(74) Representative: Müller-Boré & Partner Patentanwälte PartG mbB
(86) International application number: PCT/JP2023/007127
(87) International publication number: WO 2023/163183

(57) **Abstract**

Provided is a power storage device comprising: an electrode body that includes electrodes; a current collector that extends from the electrodes; an electrode terminal that is electrically connected to the electrode body via the current collector; an exterior film that is wrapped around the electrode body in such a manner as to have an opening; and a lid body that is disposed in the opening, wherein the lid body covers at least a part of the current collector.

## Description

### Technical Field

The present invention relates to an electrical storage device, and a method for manufacturing an electrical storage device.

### Background Art

PTL 1 discloses an all-solid-state battery as an example of an electrical storage device. The all-solid-state battery includes an electrode assembly, an electrode terminal, and an outer packaging that seals the electrode assembly. The outer packaging includes an exterior film wound around the electrode assembly so as to have an opening, and a lid disposed at the opening.

### Citation List

### Patent Literature

PTL 1: Japanese Patent Laid-open Publication No. 2019-153504

### Summary of Invention

### Technical Problem

The electrical storage device is not designed with consideration for protection of a current collector that connects an electrode assembly and an electrode terminal.

An object of the present invention is to provide an electrical storage device in which a current collector can be protected, and a method for manufacturing an electrical storage device.

### Solution to Problem

An electrical storage device according to a first aspect of the present invention includes an electrode assembly including an electrode, a current collector extending from the electrode, an electrode terminal electrically connected to the electrode assembly through the current collector, an exterior film wound around the electrode assembly so as to have an opening, and a lid disposed in the opening, the lid covering at least a part of the current collector.

An electrical storage device according to a second aspect of the present invention is the electrical storage device according to the first aspect, in which the lid is in contact with at least a part of the current collector.

An electrical storage device according to a third aspect of the present invention includes an electrode assembly including an electrode, a current collector extending from the electrode, an electrode terminal electrically connected to the electrode assembly through the current collector, an exterior film wound around the electrode assembly so as to have an opening, a lid disposed in the opening, and a protective material disposed between the lid and the electrode assembly and protecting at least a part of the current collector.

An electrical storage device according to a fourth aspect of the present invention is the electrical storage device according to the third aspect, in which the protective material is in contact with at least one of the current collector, the electrode assembly, and the exterior film.

A method for manufacturing an electrical storage device according to a fifth aspect of the present invention is a method for manufacturing an electrical storage device including an electrode assembly including an electrode, a current collector extending from the electrode, an electrode terminal electrically connected to the electrode assembly through the current collector, an exterior film wound around the electrode assembly so as to have an opening, and a lid disposed in the opening and covering at least a part of the current collector, the method including the steps of: connecting the electrode assembly and the electrode terminal through the current collector; wrapping the electrode assembly with the exterior film so as to form a space in which the lid is disposed; and filling the space with a resin for forming the lid.

A method for manufacturing an electrical storage device according to a sixth aspect of the present invention is the method for manufacturing an electrical storage device according to the fifth aspect, further including, after the step of filling the space with a resin for forming the lid, a step of forming the lid by pressing a mold against the resin filled in the space.

A method for manufacturing an electrical storage device according to a seventh aspect of the present invention is the method for manufacturing an electrical storage device according to the fifth or sixth aspect, further including, before the step of filling the space with a resin for forming the lid, a step of disposing a protective material that protects at least a part of the current collector.

### Advantageous Effect of Invention

According to the electrical storage device and the method for manufacturing an electrical storage device according to the present invention, a current collector can be protected.

### Brief Description of Drawings

[Fig. 1] Fig. 1 is a perspective view of an electrical storage device of a first embodiment.
[Fig. 2] Fig. 2 is a sectional view showing a layer configuration of an exterior film of the electrical storage device of Fig. 1.
[Fig. 3] Fig. 3 is a sectional view taken along line D3-D3 in Fig. 1.
[Fig. 4] Fig. 4 is a flowchart showing an example of a method for manufacturing the electrical storage device of Fig. 1.
[Fig. 5] Fig. 5 is a diagram related to the first step of Fig. 4.
[Fig. 6] Fig. 6 is a diagram related to the second step of Fig. 4.
[Fig. 7] Fig. 7 is another diagram related to the second step of Fig. 4.
[Fig. 8] Fig. 8 is a diagram related to the fourth step of Fig. 4.
[Fig. 9] Fig. 9 is a diagram related to the fifth step of Fig. 4.
[Fig. 10] Fig. 10 is a sectional view of an electrical storage device of a second embodiment.
[Fig. 11] Fig. 11 is a flowchart showing an example of a method for manufacturing the electrical storage device of Fig. 10.
[Fig. 12] Fig. 12 is a sectional view of an electrical storage device of a modification.

### Description of Embodiments

Hereinafter, an electrical storage device according to an embodiment of the present invention will be described with reference to the drawings. In this specification, a numerical range indicated by the term "A to B" means "A or more" and "B or less". For example, the expression of "2 to 15 mm" means 2 mm or more and 15 mm or less.

### [1. First Embodiment]

### < 1-1. Configuration of electrical storage device>

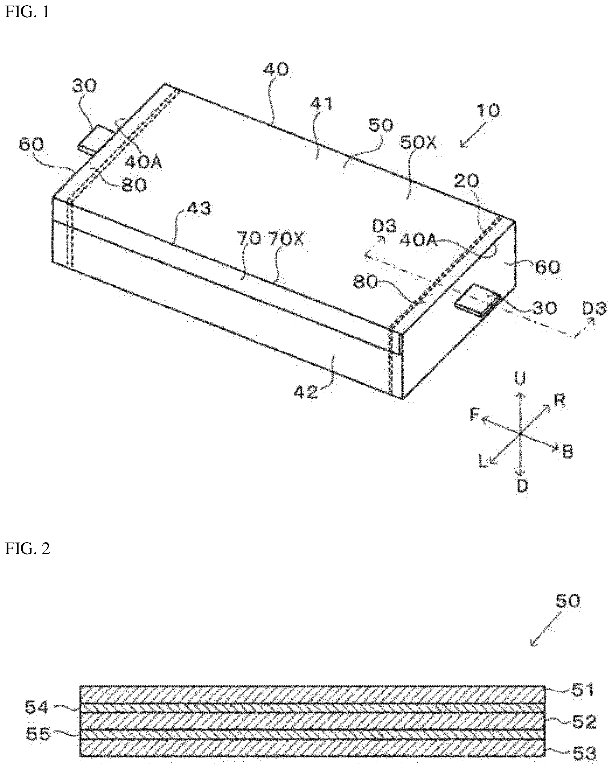

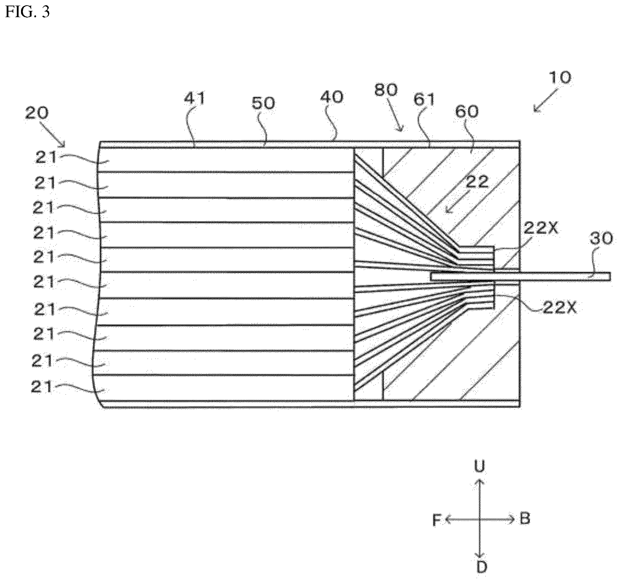

Fig. 1 is a plan view schematically showing an electrical storage device 10 of a first embodiment. Fig. 2 is a sectional view showing a layer configuration of an exterior film 50 of the electrical storage device 10 of Fig. 1. Fig. 3 is a sectional view taken along line D3-D3 in Fig. 1. In Fig. 1, the direction along arrow UD indicates a thickness direction of the electrical storage device 10, the direction along arrow LR indicates a width direction of the electrical storage device 10, and the direction along arrow FB indicates a depth direction of the electrical storage device 10. The directions indicated by each of arrows UDLRFB are also shared with the subsequent drawings.

The electrical storage device 10 includes an electrode assembly 20, an electrode terminal 30, and an outer packaging 40. The electrode assembly 20 includes, for example, electrodes (a positive electrode and a negative electrode) forming an electrical storage member of a lithium ion battery, a capacitor or an all-solid-state battery. In the present embodiment, the shape of the electrode assembly 20 is substantially a cuboid. Note that the "substantially cuboid" includes a perfect cuboid, and for example, a solid that can be seen as a cuboid by modifying the shape of a part of the outer surface thereof. The shape of the electrode assembly 20 may be, for example, a cylinder or a polygonal column.

As shown in Fig. 3, the electrode assembly 20 includes one or more of electrodes 21 (positive and negative electrodes). In the present embodiment, the electrode assembly 20 includes a plurality of electrodes 21. A current collector 22 extending from each electrode 21 is connected to the electrode terminal 30.

In the present embodiment, the electrical storage device 10 includes two electrode terminals 30. The electrode terminal 30 is a metal terminal for use in input and output of electrical power in the electrode assembly 20. One end part of the electrode terminal 30 is electrically connected to the electrode 21 (positive electrode or negative electrode) in the electrode assembly 20 through the current collector 22. The other end part of the electrode terminal 30 protrudes outward from an end edge of the outer packaging 40, for example.

The metal material for forming the electrode terminal 30 is, for example, aluminum, nickel, copper or the like. For example, when the electrode assembly 20 is a lithium ion battery, the electrode terminal 30 connected to the positive electrode is typically made from aluminum or the like, and the electrode terminal 30 connected to the negative electrode is typically made from copper, nickel or the like. The outermost layer of the electrode assembly 20 is not necessarily an electrode, and may be, for example, a protective tape or a separator.

The outer packaging 40 seals the electrode assembly 20. The outer packaging 40 includes the exterior film 50 and the lid 60. The exterior film 50 is wound around the electrode assembly 20 so as to have an opening 40A, and the lid 60 is disposed on the side of the electrode assembly 20 so as to close the opening 40A.

For example, there is a method in which a housing portion (recess) for housing the electrode assembly 20 is formed in the exterior film 50 through cold molding. However, it is not always easy to form a deep housing portion by such a method. If an attempt is made to form a deep (for example, 15 mm in terms of molding depth) housing portion (recess) by cold molding, pinholes or cracks are generated in the exterior film 50, leading to a rise in possibility that battery performance is deteriorated. On the other hand, since the outer packaging 40 seals the electrode assembly 20 by winding the exterior film 50 around the electrode assembly 20, the electrode assembly 20 can be easily sealed regardless of the thickness of the electrode assembly 20. For reducing a dead space between the electrode assembly 20 and the exterior film 50 in order to improve the volume energy density of the electrical storage device 10, it is preferable that the exterior film 50 is wound in a state of being in contact with the outer surface of the electrode assembly 20. When the electrical storage device 10 is an all-solid-state battery, it is necessary to eliminate the space between the electrode assembly 20 and the exterior film 50 from the viewpoint that it is necessary to uniformly apply a high pressure from the outer surface of the battery for exhibiting battery performance, and therefore, it is preferable that the exterior film 50 is wound in a state of being in contact with the outer surface of the electrode assembly 20.

As shown in Fig. 2, the exterior film 50 is, for example, a laminate (laminate film) including a base material layer 51, a barrier layer 52 and a heat-sealable resin layer 53 in the stated order. The exterior film 50 is not required to include all these layers, and may be free of, for example, the barrier layer 52. That is, the exterior film 50 is only required to be made from a material that is flexible and easy to bend, and the exterior film 50 may be made from, for example, a resin film. The exterior film 50 is preferably heat-sealable.

The base material layer 51 in the exterior film 50 is a layer for imparting heat resistance to the exterior film 50 to suppress generation of pinholes which may occur during processing or distribution. The base material layer 51 includes, for example, at least one of a stretched polyester resin layer and a stretched polyamide resin layer. For example, when the base material layer 51 includes at least one of a stretched polyester resin layer and a stretched polyamide resin layer, the barrier layer 52 can be protected during processing of the exterior film 50 to suppress breakage of the exterior film 50. From the viewpoint of increasing the tensile elongation of the exterior film 50, the stretched polyester resin layer is preferably a biaxially stretched polyester resin layer, and the stretched polyamide resin layer is preferably a biaxially stretched polyamide resin layer. Further, from the viewpoint of excellent piercing strength or impact strength, the stretched polyester resin layer is more preferably a biaxially stretched polyethylene terephthalate (PET) film, and the stretched polyamide resin layer is more preferably a biaxially stretched nylon (ONy) film. The base material layer 51 may include both a stretched polyester resin layer and a stretched polyamide resin layer. From the viewpoint of film strength, the thickness of the base material layer 51 is, for example, preferably 5 to 300 µm, more preferably 20 to 150 µm.

The barrier layer 52 is joined to, for example, the base material layer 51 with an adhesive layer 54 interposed therebetween. The barrier layer 52 in the exterior film 50 is made from, for example, an aluminum foil from the viewpoint of moisture resistance, processability such as extensibility, and cost. The aluminum foil preferably contains iron from the viewpoint of suitability for packaging in packaging of the electrode assembly 20, and pinhole resistance. The content of iron in the aluminum alloy foil is preferably 0.5 to 5.0 mass%, more preferably 0.7 to 2.0 mass%. When the content of iron is 0.5 mass% or more, the exterior film 50 has suitability for packaging, excellent pinhole resistance and extensibility. When the content of iron is 5.0 mass% or less, the exterior film 50 has excellent flexibility. The barrier layer 52 may include a metal foil having barrier properties, a deposited film, and a resin layer. Examples of the metal foil include an aluminum alloys, stainless steel, titanium steel, and steel plates.

From the viewpoint of barrier properties, pinhole resistance and suitability for packaging, the thickness of the barrier layer 52 is, for example, preferably 15 to 100 µm, more preferably 30 to 80 µm. When the thickness of the barrier layer 52 is 15 µm or more, the exterior film 50 is less likely to be broken even if stress is applied by packaging processing. When the thickness of the barrier layer 52 is 100 µm or less, an increase in mass of the exterior film 50 can be reduced, and a decrease in weight energy density of the electrical storage device 10 can be suppressed.

When the barrier layer 52 is an aluminum foil, it is preferable that a corrosion-resistant film is provided at least on a surface on a side opposite to the base material layer 51 for prevention of dissolution and corrosion, and the like. The barrier layer 52 may include a corrosion-resistant film on each of both surfaces. Here, the corrosion-resistant film refers to a thin film obtained by subjecting the surface of the barrier layer 52 to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance (for example, acid resistance and alkali resistance) to the barrier layer 52. Specifically, the corrosion-resistant film means a film which improves the acid resistance of the barrier layer 52 (acid-resistant film), a film which improves the alkali resistance of the barrier layer 52 (alkali-resistant film), or the like. One of treatments for forming the corrosion-resistant film may be performed, or two or more thereof may be performed in combination. In addition, not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. The definition of the chemical conversion treatment may include these treatments. When the barrier layer 52 is provided with the corrosion-resistant film, the barrier layer 52 is regarded as including the corrosion-resistant film.

The corrosion-resistant film exhibits the effects of preventing delamination between the barrier layer 52 (e.g. an aluminum alloy foil) and the base material layer 51 during molding of the exterior film 50; preventing dissolution and corrosion of the surface of the barrier layer 52, particularly dissolution and corrosion of aluminum oxide present on the surface of the barrier layer 52 when the barrier layer 52 is an aluminum alloy foil, by hydrogen fluoride generated by reaction of an electrolyte with moisture; improving the bondability (wettability) of the surface of the barrier layer 52; preventing delamination between the base material layer 51 and the barrier layer 52 during heat-sealing; and preventing delamination between the base material layer 51 and the barrier layer 52 during molding.

The heat-sealable resin layer 53 is joined to, for example, the barrier layer 52 with an adhesive layer 55 interposed therebetween. The heat-sealable resin layer 53 in the exterior film 50 is a layer that imparts a heat sealing property to the exterior film 50 by heat sealing. Examples of the heat-sealable resin layer 53 include resin films formed of a polyester-based resin such as a polyethylene terephthalate-based resin or a polybutylene terephthalate-based resin, a polyolefin-based resin such as a polyethylene-based resin or a polypropylene-based resin, a cyclic polyolefin-based resin, or an acid-modified polyolefin-based resin obtained by graft-modifying the polyolefin-based resin with an acid such as maleic anhydride. From the viewpoint of sealability and strength, the thickness of the heat-sealable resin layer 53 is, for example, preferably 20 to 300 µm, more preferably 40 to 150 µm.

The exterior film 50 preferably includes one or more layers having a buffer function (hereinafter, referred to as "buffer layers") outside the heat-sealable resin layer 53, more preferably outside the barrier layer 52. The buffer layer may be laminated outside the base material layer 51, and the base material layer 51 may also function as a buffer layer. When the exterior film 50 includes a plurality of buffer layers, the buffer layers may lie side-by-side, or may be laminated with the base material layer 51, the barrier layer 52 or the like interposed between the buffer layers.

A material for forming the buffer layer can be arbitrarily selected from materials having a cushioning property. The material having a cushioning property is, for example, rubber, a nonwoven fabric, or a foamed sheet. The rubber is, for example, natural rubber, fluororubber, or silicon rubber. The rubber hardness is preferably about 20 to 90. The material for forming a nonwoven fabric is preferably a material having excellent heat resistance. When the buffer layer is made from a nonwoven fabric, the lower limit of the thickness of the buffer layer is preferably 100 µm, more preferably 200 µm, still more preferably 1,000 µm. When the buffer layer is made from a nonwoven fabric, the upper limit of the thickness of the buffer layer is preferably 5,000 µm, more preferably 3,000 µm. The thickness of the buffer layer is preferably in the range of 100 µm to 5,000 µm, 100 µm to 3,000 µm, 200 µm to 5,000 µm, 200 µm to 3,000 µm, 1,000 µm to 5,000 µm, or 1,000 µm to 3,000 µm. The thickness of the buffer layer is most preferably in the range of 1,000 µm to 3,000 µm.

When the buffer layer is made from rubber, the lower limit of the thickness of the buffer layer is preferably 0.5 mm. When the buffer layer is made from rubber, the upper limit of the thickness of the buffer layer is preferably 10 mm, more preferably 5 mm, still more preferably 2 mm. When the buffer layer is made from rubber, the thickness of the buffer layer is in the range of 0.5 mm to 10 mm, 0.5 mm to 5 mm, or 0.5 mm to 2 mm.

When the exterior film 50 includes a buffer layer, the buffer layer functions as a cushion, so that the exterior film 50 is prevented from being damaged by the impact of falling of the electrical storage device 10 or handling during manufacturing of the electrical storage device 10.

In the present embodiment, with the exterior film 50 wound around the electrode assembly 20 so as to have the opening 40A, surfaces of the exterior film 50 which face each other (heat-sealable resin layer 53) are heat-sealed to form a first sealed portion 70. In the present embodiment, the first sealed portion 70 extends in a longitudinal direction of the outer packaging 40. In the outer packaging 40, a location at which the first sealed portion 70 is formed can be arbitrarily selected. In the present embodiment, a root 70X of the first sealed portion 70 is located on a side 43 of a boundary between the first surface 41 and the second surface 42 of the outer packaging 40. The first surface 41 has a larger area over the second surface 42. The root 70X of the first sealed portion 70 may be located on an arbitrary surface of the outer packaging 40. In the present embodiment, for example, the first sealed portion 70 is folded toward the second surface 42 of the outer packaging 40. The first sealed portion 70 may protrude outward with respect to the electrode assembly 20 in plan view, or may be folded toward the first surface 41.

The lid 60 generally has, for example, a cuboid shape, and is made from, a resin material. The lid 60 may be formed by, for example, cold-molding the exterior film 50. Examples of the material for forming the lid 60 include polyester-based resins such as polyethylene terephthalate-based resins and polybutylene terephthalate-based resins, polyolefin-based resins such as polyethylene-based resins, fluorine-based resins and polypropylene-based resins, cyclic polyolefin-based resins, or acid-modified polyolefin-based resins obtained by graft-modifying the polyolefin-based resin with an acid such as maleic anhydride. From the viewpoint of suitably heat-sealing the lid 60 and the exterior film 50, the main components of materials for forming the lid 60 and materials for forming the heat-sealable resin layer 53 of the exterior film 50 are preferably the same. In the present embodiment, examples of the main component of the material for forming the lid 60 and the material for forming the heat-sealable resin layer 53 include polyolefin-based resins such as polyethylene-based resins and polypropylene-based resins, and acid-modified polyolefin-based resins obtained by graft-modifying the polyolefin-based resin with an acid such as maleic anhydride. Note that the main component refers to, for example, a material that accounts for 50% or more of the materials contained in a constituent element.

In the present embodiment, the lid 60 covers at least a part of the current collector 22 for protecting the current collector 22. Preferably, the lid 60 is in contact with the covered current collector 22. More preferably, the lid 60 is joined to the covered current collector 22. In the present embodiment, the lid 60 covers all current collectors 22, and is joined to the outermost current collector 22. The lid 60 may be disposed so as to fill gaps between a plurality of current collectors 22.

In the present embodiment, a second sealed portion 80 is formed by heat-sealing the heat-sealable resin layer 53 of the exterior film 50 and a lateral surface of the lid 60 (hereinafter, referred to as a "seal surface 61"). Hereinafter, the sealing strength between the heat-sealable resin layer 53 of the exterior film 50 and the seal surface 61 of the lid 60 may be referred to as sealing strength of the second sealed portion 80. The sealing strength of the second sealed portion 80 is the sealing strength between the heat-sealable resin layer 53 and the lid 60 in the long-side portion of the seal surface 61, that is, the seal surface 61 extending in the LR (width) direction in Fig. 1. The exterior film 50 is in the UD (vertical) direction in Fig. 1 with respect to the lid 60, and the sealing strength of the second sealed portion 80 is measured on the basis of a distance of the second sealed portion 80 in the FB (depth) direction. The sealing strength of the second sealed portion 80 of the lid 60 divided into a plurality of parts including long sides and short sides is the sealing strength at the long-side portion of the seal surface 61 of the plurality of parts.

From the viewpoint of suitably maintaining the state in which the electrode assembly 20 is sealed with the outer packaging 40, the sealing strength of the second sealed portion 80 is preferably 40 N/15 mm or more, more preferably 50 N/15 mm or more, still more preferably 60 N/15 mm or more, still more preferably 70 N/15 mm or more, still more preferably 85 N/15 mm or more. When the sealing strength of the second sealed portion 80 is 40 N/15 mm or more, a state in which the electrode assembly 20 is sealed with the outer packaging 40 is suitably maintained even if the electrical storage device 10 is used for, for example, several years (less than 10 years). When the sealing strength of the second sealed portion 80 is 85 N/15 mm or more, a state in which the electrode assembly 20 is sealed with the outer packaging 40 is suitably maintained even if the electrical storage device 10 is used for, for example, 10 years or more. The sealing strength of the second sealed portion 80 is preferably 150 N/15 mm or less. The sealing strength of the second sealed portion 80 is preferably in the range of 40 N/15 mm to 150 N/15 mm, 50 N/15 mm to 150 N/15 mm, 60 N/15 mm to 150 N/15 mm, 70 N/15 mm to 150 N/15 mm, or 85 N/15 mm to 150 N/15 mm.

When the lid 60 has a plate shape, the lid 60 is preferably thick enough to suppress deformation of the outer packaging 40 even if electrical storage devices 10 are stacked on top of another. From another point of view, when the lid 60 has a plate shape, the seal surface 61 of the lid 60 is preferably thick enough to ensure that the seal surface 61 of the lid 60 and the exterior film 50 can be suitably heat-sealed in formation of the second sealed portion 80. The minimum value of the thickness of the lid 60 is, for example, 1.0 mm, more preferably 3 mm, still more preferably 4 mm. The maximum value of the thickness of the lid 60 is, for example, 10 mm, more preferably 8.0 mm, still more preferably 7.0 mm. The maximum value of the thickness of the lid 60 may be 10 mm or more. The thickness of the material for forming the lid 60 is preferably in the range of 1.0 mm to 10 mm, 1.0 mm to 8.0 mm, 1.0 mm to 7.0 mm, 3.0 mm to 10 mm, 3.0 mm to 8.0 mm, 3.0 mm to 7.0 mm, 4.0 mm to 10 mm, 4.0 mm to 8.0 mm, or 4.0 mm to 7.0 mm. In the present embodiment, when the lid 60 is described as having a plate shape, the material for forming the lid 60 does not include a film defined by Japanese Industrial Standard (JIS), Packaging Terminology Standard. The thickness of the lid 60 may vary depending on a portion of the lid 60. When the thickness of the lid 60 varies depending on a portion, the thickness of the thickest portion of the lid 60 is defined as a thickness of the lid 60.

### < 1-2. Method for manufacturing electrical storage device>

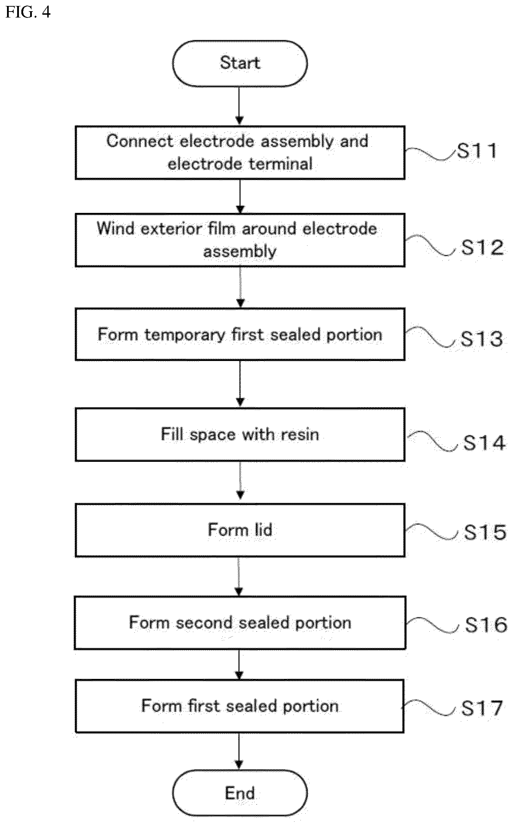

Fig. 4 is a flowchart showing an example of a method for manufacturing the electrical storage device 10. The method for manufacturing the electrical storage device 10 includes, for example, a first step, a second step, a third step, a fourth step, a fifth step, a sixth step and a seventh step. The first to seventh steps are carried out by, for example, an apparatus for manufacturing the electrical storage device 10. In the present embodiment, the term "first to seventh steps" refers to conveniently assigned names of the steps, and does not mean the order of the steps.

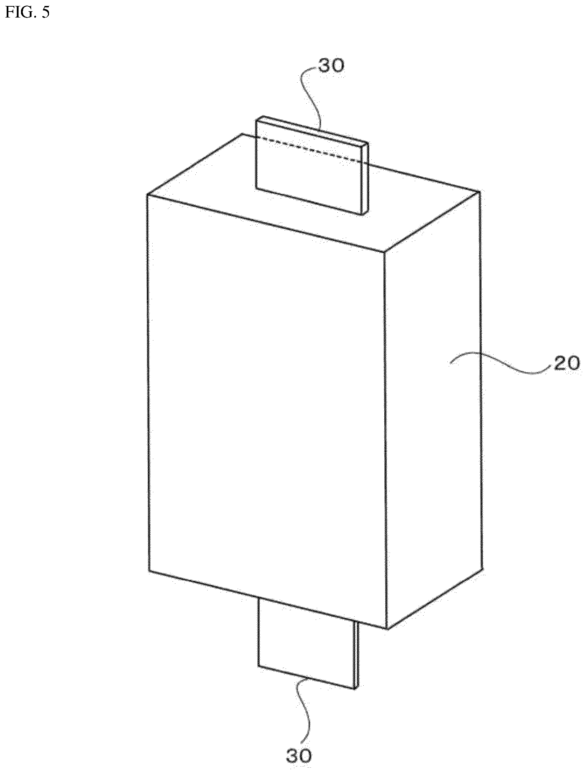

Fig. 5 is a diagram related to the first step as step S11. In the first step, the manufacturing apparatus electrically connects the electrode assembly 20 and the electrode terminal 30 through the current collector 22. In Figs. 5 to 9, diagrammatic representation of the current collector 22 is omitted for simplification of the drawings.

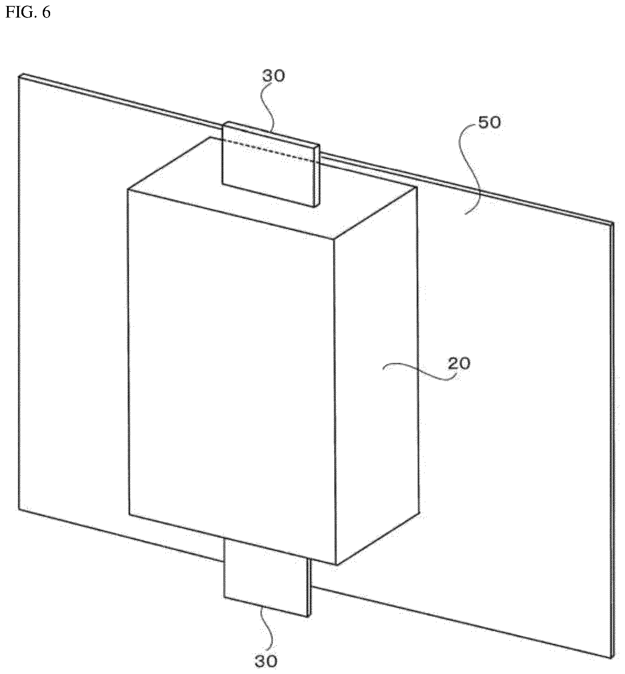

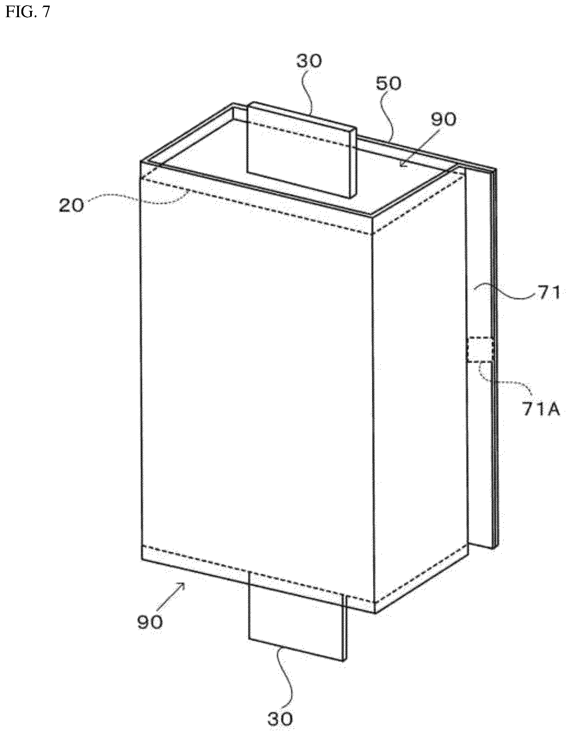

Figs. 6 and 7 are diagrams relating to the second step as step S12. The second step is carried out after the first step. In the second step, the manufacturing apparatus winds the exterior film 50 around the electrode assembly 20. In the second step, the manufacturing apparatus wraps the electrode assembly 20 with the exterior film 50 so as to form two spaces 90 in which the lid 60 is disposed as shown in Fig. 7. The second step may be carried out before the first step.

The third step as step S13 is carried out after the first step or the second step. In the third step, the manufacturing apparatus heat-seals the opposed heat-sealable resin layers 53 of the exterior film 50 to form a first sealed portion 70, a part of which is an unsealed portion 71A (see Fig. 7) (hereinafter, referred to as a "temporary first sealed portion 71"). The unsealed portion 71A can be formed by using, for example, a seal bar having a shape such that a part of the sealing bar does not come into contact with the exterior film 50. In another example, the unsealed portion 71A can be formed by interposing a fluororesin film or the like between surfaces (heat-sealable resin layers 53) of the exterior film 50, which face each other. By forming the temporary first sealed portion 71 before formation of the second sealed portion 80, the electrode assembly 20 can be held by the exterior film 50, so that the location of the electrode assembly 20 is unlikely to shift with respect to the exterior film 50. This suppresses generation of wrinkles during formation of the second sealed portion 80.

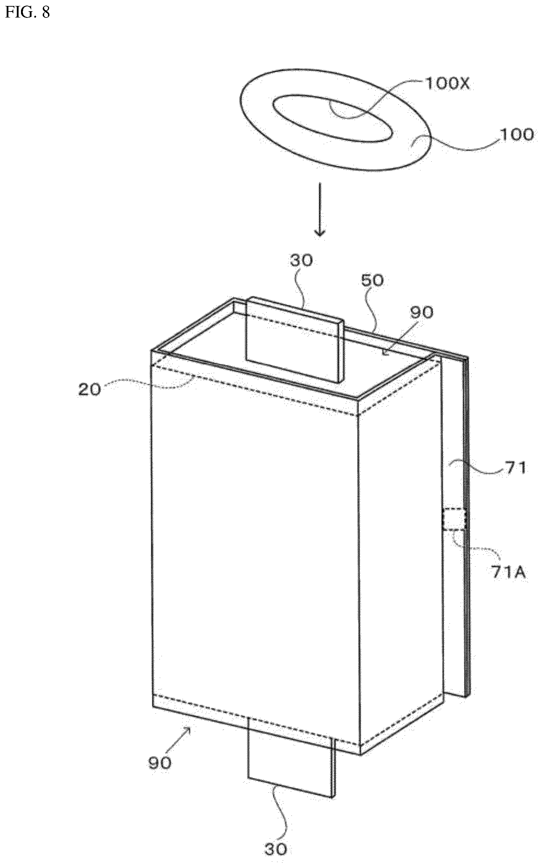

Fig. 8 is a diagram related to the fourth step as step S14. The fourth step is carried out after the third step. In the fourth step, the manufacturing apparatus fills one space 90 with a resin 100 for forming the lid 60. The resin 100 is molten and has predetermined fluidity. The resin 100 has, for example, a ring shape with a hole 100X at the center which enables passage of the electrode terminal 30.

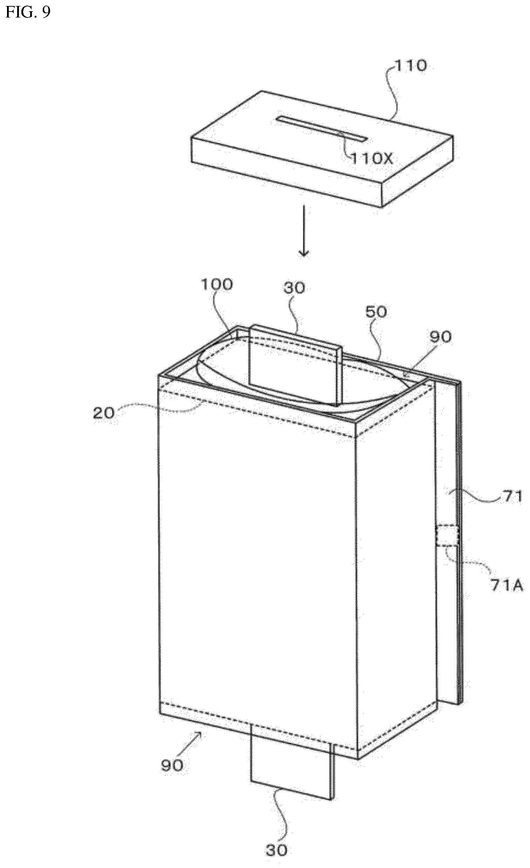

Fig. 9 is a diagram related to the fifth step as step S15. The fifth step is carried out after the fourth step. In the fifth step, the manufacturing apparatus forms the lid 60 by pressing a mold 110 against the resin 100 filled in one space 90. The mold 110 has a size allowing the mold 110 to be housed in the space 90, and has a hole 110X at the center through which the electrode terminal 30 can be inserted. By completion of the fifth step, the current collector 22 is covered with the lid 60, and the lid 60 and the current collector 22 are joined.

The sixth step as step S16 is carried out after the fifth step or in parallel to the fifth step. In the sixth step, the manufacturing apparatus forms the second sealed portion 80 by heat-sealing the exterior film 50 and the seal surface 61 of the lid 60. The manufacturing apparatus also carries out the fourth step, the fifth step and the sixth step on the other space 90.

The seventh step as step S17 is carried out after the fourth step, the fifth step and the sixth step are carried out on two spaces 90. In the seventh step, the manufacturing apparatus injects an electrolytic solution from the unsealed portion 71A of the temporary first sealed portion 71, evacuates the exterior film 50, and then heat-seals the unsealed portion 71A to form the first sealed portion 70. When the electrical storage device 10 is an all-solid-state battery, the step of injecting an electrolytic solution in the seventh step is omitted.

### < 1-3. Action and effect of electrical storage device>

In the electrical storage device 10, the lid 60 covers at least a part of the current collector 22. Therefore, for example, even if an external force acts on the electrical storage device 10, the current collector 22 is protected by the lid 60.

### [2. Second Embodiment]

An electrical storage device 200 of a second embodiment has the same configuration as in the first embodiment except that a protective material 210 is provided. Hereinafter, the electrical storage device 200 of the second embodiment will be described mainly for portions different from those in the first embodiment.

### <2-1. Configuration of electrical storage device>

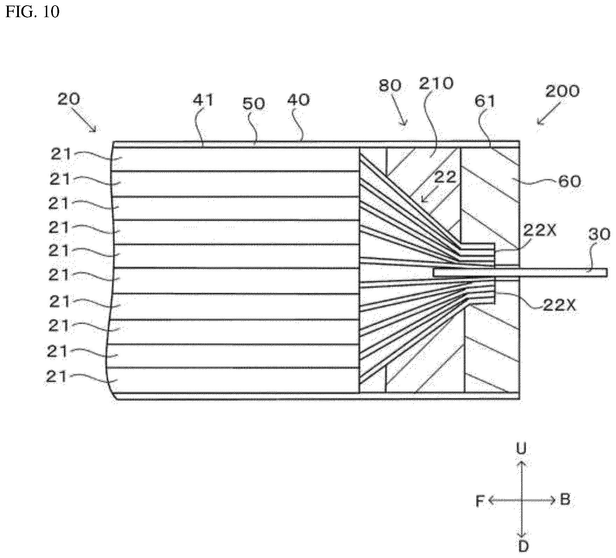

Fig. 10 is a sectional view of the electrical storage device 200. The electrical storage device 200 includes a protective material 210 which is disposed between a lid 60 and an electrode assembly 20 and protects a current collector 22. The protective material 210 covers at least a part of the current collector 22. Preferably, the protective material 210 is in contact with the covered current collector 22. More preferably, the protective material 210 is joined to the covered current collector 22. In the present embodiment, the protective material 210 covers all current collectors 22, and is joined to the outermost current collector 22. The protective material 210 may be disposed so as to fill gaps between a plurality of current collectors 22. In the present embodiment, a portion of the current collector 22 which is welded to an electrode terminal 30, i.e., a welded portion 22X, is covered with the lid 60. The lid 60 is joined to the welded portion 22X.

The protective material 210 can be arbitrarily selected. The protective material 210 may be a film or a resin molded product. For the protective material 210, for example, any resin capable of protecting the current collector 22, such as a polyester-based resin, a polyolefin-based resin, a polyamide-based resin or a polycarbonate-based resin, can be used.

### <2-2. Method for manufacturing electrical storage device>

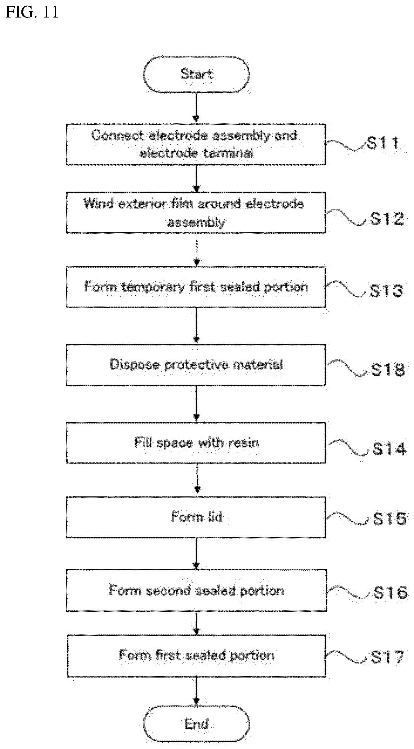

Fig. 11 is a flowchart showing an example of a method for manufacturing the electrical storage device 200. The manufacturing method shown in Fig. 11 further includes an eighth step as step S18 in addition to the steps shown in Fig. 4. In the eighth step, the manufacturing apparatus disposes the protective material 210 for protecting the current collector 22. The eighth step can be carried out at any time after the first step and before the fourth step.

### <2-3. Action and effect of electrical storage device>

In the electrical storage device 10, the protective material 210 covers at least a part of the current collector 22. Therefore, for example, even if an external force acts on the electrical storage device 10, the current collector 22 is protected by the protective material 210.

### <3. Modifications>

The above-described embodiments are an example of possible forms of an electrical storage device, and a method for manufacturing an electrical storage device according to the present invention, and are not intended to limit the forms thereof. The electrical storage device, and the method for manufacturing an electrical storage device according to the present invention may have a form different from that exemplified in each of the embodiment. An example thereof is a form in which a part of the configuration of any of the embodiments is replaced, changed or omitted, or a form in which a new configuration is added to any of the embodiments. Some examples of modifications of the embodiments will be described below. Note that the above embodiments and the following modifications can be combined as long as they are not technically contradictory.

<3-1>
In the electrical storage device 10 of the first embodiment, two electrode terminals 30 may protrude from one of two lids 60. In this modification, a portion of the outer packaging 40 where the other lid 60 is disposed can be sealed by a known method. For example, the other lid 60 may be omitted, and the exterior film 50 may be folded to seal the electrode assembly 20. This modification can also be applied to the electrical storage device 200 of the second embodiment.

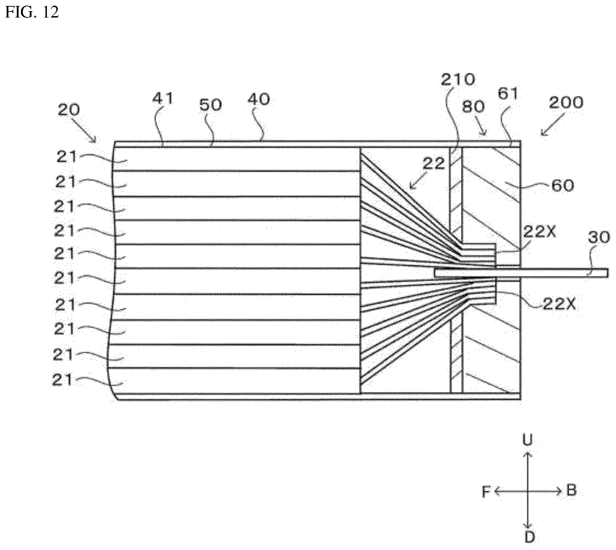

<3-2>
In the electrical storage device 200 of the second embodiment, the configuration of the protective material 210 can be arbitrarily changed. For example, the protective material 210 may be a plate which is disposed between the electrode assembly 20 and the welded portion 22X and separates sections inside the outer packaging 40 as shown in Fig. 12.

<3-3>
In the electrical storage device 10 of the first embodiment, the electrode terminal 30 is only required to enable input and output of electrical power in the electrode assembly 20, and is not required to protrude from the outer packaging 40, for example. For example, the electrode terminal 30 may have any shape including a surface that is flush with a surface of the lid 60 which faces the outer portion of the outer packaging 40. This modification can also be applied to the electrical storage device 10 of the second embodiment.

<3-4>
In the electrical storage device 10 of the first embodiment, the fifth step as step S15 shown in Fig. 9 may be omitted. For example, when the resin 100 has high fluidity, in other words, low viscosity, the resin 100 spreads so as to fill the space 90 as the space 90 is filled with the resin 100 in the fourth step as step S14. Therefore, when the resin 100 has high fluidity, the fifth step can be omitted. This modification can also be applied to the electrical storage device 200 of the second embodiment.

<3-5>
In electrical storage device 10 of the first embodiment, exterior film 50 may be a laminate (laminate film) including the heat-sealable resin layers 53 on both surfaces of the barrier layer 52. In this modification, the first sealed portion 70 may be formed by heat-sealable resin layers 53 laminated on one side or the other side of the barrier layer 52, or may be formed by heat-sealing the heat-sealable resin layer 53 laminated on one side and the heat-sealable resin layer 53 laminated on the other side of the barrier layer 52. In this modification, the root 70X of the first sealed portion 70 is located on an arbitrary surface of the outer packaging 40. In this modification, it is preferable that the root 70X of the first sealed portion 70 is located on a side 43 which is a boundary between the first surface 41 and the second surface 42. In this modification, the heat-sealable resin layer 53 may be joined to, for example, the barrier layer 52 with an adhesive layer 55 interposed therebetween. This modification can also be applied to the electrical storage device 200 of the second embodiment.

### Reference Signs List

10 Electrical storage device
20 Electrode assembly
21 Electrode
22 Current collector
30 Electrode terminal
50 Exterior film
60 Lid
100 Resin
110 Mold
200 Electrical storage device
210 Protective material

## Claims

1. An electrical storage device comprising:
an electrode assembly including an electrode;
a current collector extending from the electrode;
an electrode terminal electrically connected to the electrode assembly through the current collector;
an exterior film wound around the electrode assembly so as to have an opening; and
a lid disposed in the opening,
the lid covering at least a part of the current collector.

2. The electrical storage device according to claim 1, wherein the lid is in contact with at least a part of the current collector.

3. An electrical storage device comprising:
an electrode assembly including an electrode;
a current collector extending from the electrode;
an electrode terminal electrically connected to the electrode assembly through the current collector;
an exterior film wound around the electrode assembly so as to have an opening;
a lid disposed in the opening; and
a protective material disposed between the lid and the electrode assembly and protecting at least a part of the current collector.

4. The electrical storage device according to claim 3, wherein the protective material is in contact with at least one of the current collector, the electrode assembly, and the exterior film.

5. A method for manufacturing an electrical storage device, wherein
the electrical storage device includes:
an electrode assembly including an electrode;
a current collector extending from the electrode;
an electrode terminal electrically connected to the electrode assembly through the current collector;
an exterior film wound around the electrode assembly so as to have an opening; and
a lid disposed in the opening and covering at least a part of the current collector,
the method for manufacturing an electrical storage device comprising the steps of:
connecting the electrode assembly and the electrode terminal through the current collector;
wrapping the electrode assembly with the exterior film so as to form a space in which the lid is disposed; and
filling the space with a resin for forming the lid.

6. The method for manufacturing an electrical storage device according to claim 5, further comprising, after the step of filling the space with a resin for forming the lid, a step of forming the lid by pressing a mold against the resin filled in the space.

7. The method for manufacturing an electrical storage device according to claim 5 or 6, further comprising, before the step of filling the space with a resin for forming the lid, a step of disposing a protective material that protects at least a part of the current collector.
